# EUROPÄISCHE PATENTANMELDUNG

(11) **EP 1 111 759 A2**
(43) Veröffentlichungstag der Anmeldung: **27.06.2001**
(21) Anmeldenummer: 00710038.1
(22) Anmeldetag: 12.12.2000
(51) Int. Cl.: H02K 7/116

(54) **Elektrische Antriebsvorrichtung, insbesondere Getriebemotor**

(30) Priorität: 20.12.1999 DE 19961054
(71) Anmelder: Voith Turbo GmbH & Co. KG, 89522 Heidenheim (DE)
(72) Erfinder: Mühlberger, Uwe, 89522 Heidenheim (DE)
(74) Vertreter: Dr. Weitzel & Partner

(57) **Zusammenfassung**

Die Erfindung betrifft eine elektrische Antriebsvorrichtung (1) mit einer Antriebsmaschine (3) und einer mit dieser drehfest verbundenen mechanischen Drehzahl-/Drehmomentenwandlungseinrichtung (6). Beide sind koaxial zueinander angeordnet. Die elektrische Antriebsmaschine (3) umfaßt einen Rotor (4) mit einer Rotorwelle (9) und einem Stator (4). Die mechanische Drehzahl-/Drehmomentwandlungseinrichtung (6) umfaßt mindestens einen Planetenradsatz (7) mit einem Sonnenrad (7.1), einem Hohlrad (7.2), Planetenrädern (7.3) und einem Steg (7.4), wobei der Eingang (8) des Planetenradsatzes (7) vom Sonnenrad (7.1) und der Abtrieb vom Steg (7.4) gebildet werden. Erfindungsgemäß ist das Sonnenrad (7.1) auf der Rotorwelle (9) angeordnet. Die Rotorwelle (9) ist im Bereich des Rotorwellenenendes, welches von der mechanischen Drehzahl-/Drehmomentwandlungseinrichtung (6) abgewandt ist, mittels einer ersten, ein Festlager umfassenden Lageranordnung (11) an einem ortsfesten Gehäuseteil (12) und im Bereich des antriebsseitigen und das Sonnenrad (7.1) tragenden Rotorwellenenendes in einer zweiten Lageranordnung, welche von den Planetenrädern (7.3) des Planetenradsatzes (7) gebildet wird, gelagert. Der Steg (7.4) stützt sich über eine weitere dritte Lageranordnung (33) wenigstens mittelbar am ortsfesten Gehäuseteil (12) ab.

## Beschreibung

Die Erfindung betrifft eine elektrische Antriebsvorrichtung, insbesondere einen Getriebemotor.

Elektrische Antriebsvorrichtungen, insbesondere in Form von Getriebemotoren sind in einer Vielzahl von Ausführungen bekannt. Diese umfassen eine elektrische Antriebsmaschine mit mindestens einem Rotor und einem Stator und eine, mit dem Abtrieb dieser koppelbare mechanische Drehzahl/Drehmomentwandlungseinrichtung, welche wenigstens ein Planetengetriebe mit mindestens einem Planetenradsatz mit einem Sonnenrad, einem Hohlrad, einem Planetenträger und Planetenrädem aufweist. Dabei stützen sich der Planetenradatz und die elektrische Antriebsmaschine über separate Lagerungen ab. Die Rotorwelle des Elektromotors ist beidseitig gelagert und über ein entsprechend ausgeführtes Kupplungsteil mit dem separat gelagerten Sonnenrad des Eingangsplanetengetriebes verbunden. Diese bekannten Ausführungen weisen jedoch den Nachteil auf, daß diese in axialer Richtung lang bauen, d.h. beim Einbau in Antriebssystemen die Bereitstellung eines bestimmten Bauraumes erfordern. Zwingend erforderlich sind desweiteren die einzelnen Lageranordnungen für die elektrische Antriebsmaschine, insbesondere Rotorwelle und die mechanische Drehzahl/Drehmomentenwandlungseinrichtung und ein Kupplungsteil zum Ausgleich von Radial- und Winkelfehlern zwischen den beiden Elementen. Damit sind derartige Getriebemotoren nicht oder nur bedingt für den Einsatz in Anwendungen mit geringem zur Verfügung stehendem Einbauraum, beispielsweise in Einzelradantrieben, geeignet.

Der Erfindung liegt daher die Aufgabe zugrunde, eine elektrische Antriebsvorrichtung, insbesondere einen Getriebemotor mit einem momentenstarken Elektromotor derart weiterzuentwickeln, daß dieser auch für Anwendungsfälle mit geringem zur Verfügung stehendem Einbauraum geeignet ist. Die konstruktive Ausführung gegenüber den im Sand der Technik bekannten Lösungen soll stark vereinfacht werden. Dabei soll möglichst auf zusätzliche Lageranordnungen und Mittel zum Ausgleich von Radial- und Winkelfehlern verzichtet werden können. Die Ausführung der Getriebebaueinheit soll sich dabei durch eine minimale Bauteilanzahl und einen geringen fertigungstechnischen sowie Montageaufwand auszeichnen.

Die erfindungsgemäße Lösung der Aufgabe ist durch die Merkmale des Anspruchs 1 charakterisiert. Vorteilhafte Ausgestaltungen sind in den Unteransprüchen beschrieben.

Die elektrische Antriebsvorrichtung, insbesondere der Getriebemotor umfaßt eine elektrische Antriebsmaschine, welche vorzugsweise als Wechselstrommaschine, die nach dem Grundprinzip der Wanderfeld-Erzeugung arbeitet, ausgeführt ist, und eine mechanische Drehzahl/Drehmomentwandlungseinrichtung, welche der elektrischen Antriebsmaschine in Leistungsübertragungseinrichtung im Traktionsbetrieb betrachtet, d.h. im motorischen Betrieb der elektrischen Antriebsmaschine, nachgeschaltet ist. Die mechanische Drehzahl/Drehmomentwandlungseinrichtung umfaßt dabei wenigstens einen Planetenradsatz, umfassend ein Sonnenrad, eine Mehrzahl Planetenräder, ein Hohlrad und einen Steg. Der Eingang des Planetenradsatzes wird dabei vom Sonnenrad gebildet, während der Abtrieb vom Steg gebildet wird. Der Eingang des Planetentradsatzes, das heißt das Sonnenrad ist dabei drehfest mit dem Rotor der elektrischen Antriebsmaschine verbunden.
Erfindungsgemäß erfolgt die Lagerung der Rotorwelle im Bereich des Rotorwellenenendes, welches von der mechanischen Drehzahl/Drehmomentwandlungseinrichtung abgewandt ist, mittels einer Festlageranordnung an einem ortsfesten Gehäuseteil und das antriebsseitige Rotorwellenenende in den Planetenrädern des Planetenradsatzes. Da der Planetenradsatz sich des weiteren erfindungsgemäß ebenfalls an dem ortsfesten Gehäuseelement abstützt, erfolgt somit eine Lagerung der Rotorwelle im ortsfesten Gehäuse, wobei jedoch im antriebsseitigen Bereich auf eine spezielle Lagerung verzichtet werden kann und eine breite Lagerbasis durch die Lagerung im Planetenträger realisiert wird.

Durch die erfindungsgemäße Lösung wird es möglich, auftretende Radialfehler zwischen Festlager und Planetenträgerlagerung für die Verzahnungen ohne negative Folgen auszugleichen. Im lastfreien Zustand kann dann auf dieser Seite die Rotorlagerung entsprechend dem Zahnspiel außermittig sein, während unter Last der Rotor jedoch wieder zentriert wird.

Vorzugsweise ist die elektrische Antriebsmaschine als Transversalflußmaschine ausgeführt. Die konkrete konstruktive Ausgestaltung kann unterschiedlich sein. Die Transversalflußmaschine kann dabei entsprechend den Ausführungen, beschrieben in den nachfolgend genannten Druckschriften ausgebildet werden:
1. DE 35 36 538 A1
2. DE 37 05 089 C1
3. DE 39 04 516 C1
4. DE 41 25 779 C1.

Der Offenbarungsgehalt bezüglich der Ausgestaltung und Arbeitsweise von elektrischen Maschinen, insbesondere Wechselstrommaschinen entsprechend den genannten Druckschriften wird hiermit vollumfänglich in den Offenbarungsgehalt der vorliegenden Anmeldung miteinbezogen. Die in diesen Druckschriften beschriebenen elektrischen Antriebsmaschinen umfassen wenigstens einen Stator mit wenigstens einer Ankerwicklung und einen der Ankerwicklung gegenüberliegenden Rotor. Der Rotor besteht dabei aus wenigstens zwei nebeneinander angeordneten, durch eine Zwischenlage aus magnetisch und elektrisch nicht leitendem Material getrennten Ringelementen, die in Umfangsrichtung eine Vielzahl von wechselweise angeordneten polarisierten Magneten und Weicheisenelementen aufweisen. Eine derartige Anordnung zweier Ringelemente bildet eine Polstruktur. Bei einer symmetrisch gestalteten Transversalflußmaschine ist jeweils eine Polstruktur zu beiden Seiten an einer zentralen Trägerscheibe angeordnet. Vorzugsweise ist der Stator derart ausgebildet, daß dieser einen Außen- und einen Innenstator umfaßt, das heißt, daß der Rotor in radialer Richtung betrachtet zwischen dem Außenstator und dem Innenstator rotiert. Denkbar ist jedoch auch der Einsatz von Ausführungen mit nur einem Innenstator oder einem Außenstator.

Unter einem weiteren Aspekt der Erfindung wird dabei das ortsfeste Gehäuseteil vom statortragenden Bauelement gebildet. Das statortragende Element kann dabei einteilig oder aber mehrteilig ausgeführt sein. Dieses übernimmt die Abstützung der Momente.

Die erfindungsgemäße Lösung ist nachfolgend anhand von Figuren erläutert. Darin ist im einzelnen folgendes dargestellt:
- Fig. 1: verdeutlicht in einem Axialschnitt den Aufbau einer erfindungsgemäß gestalteten elektrischen Antriebsvorrichtung, insbesondere eines Getriebemotors;
- Fig. 2: verdeutlicht in einem Ausschnitt einer Schnittdarstellung einer Radantriebseinheit eine Einsatzmöglichkeit eines erfindungsgemäß gestalteten Getriebemotors.

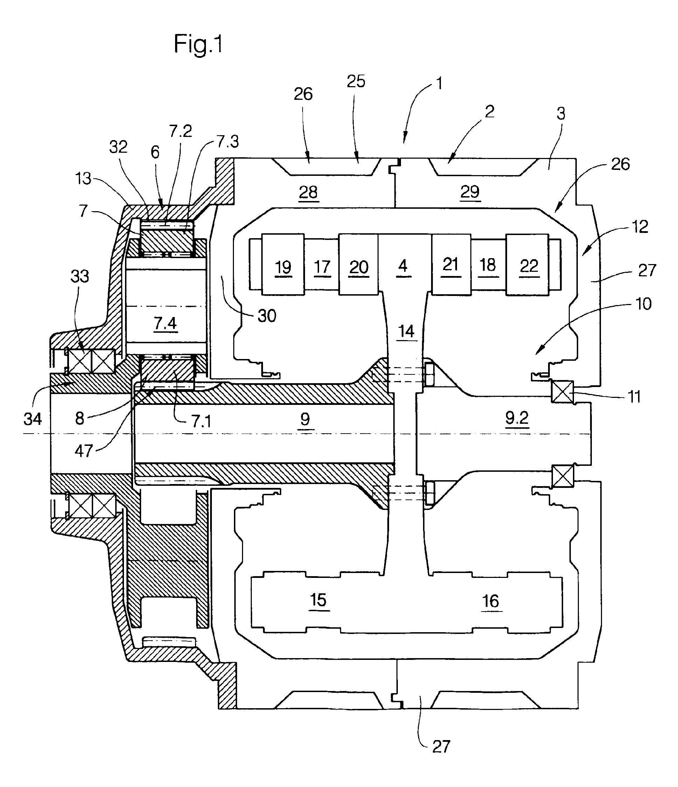

Figur 1 verdeutlicht in schematisch stark vereinfachter Darstellung das Grundprinzip der erfindungsgemäßen Ausgestaltung einer elektrischen Antriebsvorrichtung 1, insbesondere in Form eines Getriebemotors 2. Dieser umfaßt eine elektrische Antriebsmaschine 3 mit mindestens einem Rotor 4 und einem, hier im einzelnen nicht dargestellten Stator 5 und des weiteren eine mechanische Drehzahl-/Drehmomentwandlungseinrichtung 6, umfassend mindestens einen Planetenradsatz 7. Der Rotor 4 ist dabei drehfest mit einem Eingang 8 des Planetenradsatzes 7 verbunden. Der Eingang 8 wird vorzugsweise vom Sonnenrad 7.1 des Planetenradsatzes gebildet. Das Sonnenrad 7.1 ist zu diesem Zweck drehfest mit dem Rotor 4, insbesondere der Rotorwelle 9 verbunden, beispielsweise mittels einer Keilwellenverbindung 47 oder wird, hier nicht dargestellt, direkt von der Rotorwelle 9 gebildet, wobei in diesem Fall Rotorwelle 9 und Sonnenrad 7.1 als einteiliges Bauelement ausgeführt sind. Die mechanische Drehzahl/Drehmomentwandlungseinrichtung 6 ist dabei in Leistungsflußrichtung im Traktionsbetrieb beim Einsatz in Fahrzeugen betrachtet der elektrischen Antriebsmaschine 3 nachgeschaltet. Die mechanische Drehzahl/Drehmomentwandlungseinrichtung 6 und die elektrische Antriebsmaschine 3 sind koaxial zueinander angeordnet, das bedeutet, daß diese räumlich nebeneinander angeordnet sind. Der Rotor 4, insbesondere die Rotorwelle 9 ist dabei hinsichtlich der Charakterisierung der Ausrichtung der Rotorwellenendbereiche in zwei Teilbereiche unterteilbar, einen ersten antriebsseitigen Teilbereich 9.1, welcher das Sonnenrad 7.1 des Planetenradsatzes 7 trägt, und einen zweiten Teilbereich 9.2, welcher vom antriebsseitigen Teilbereich abgewandt ist. Erfindungsgemäß ist dabei der Rotor 4, insbesondere der zweite Teilbereich 9.2 der Rotorwelle 9 auf der von der mechanischen Drehzahl-/Drehmomentwandlungseinrichtung 6 abgewandten Seite 10 über eine Lageranordnung 11 in einem ortsfesten Element, vorzugsweise Gehäuseteil 12 gelagert. Die antriebsseitige Lagerung der Rotorwelle 9, das heißt die Lagerung des ersten Teilbereiches 9.1 der Rotorwelle 9, welcher das Sonnenrad 7.1 des Planetenradsatzes 7 trägt, erfolgt direkt im Planetenradsatz 7, insbesondere in den einzelnen Planetenrädern 7.3 des Planetenradsatzes 7. Diese stützen sich wiederum über den Steg 7.4 des Planetenradsatzes 7 wenigstens mittelbar am ortsfesten Gehäuseteil 12 ab, wobei die Abstützung beispielsweise über ein zum Gehäuseteil 12 gehörendes Teilement 13 erfolgt. Die Abstützung erfolgt somit beidseitig jeweils am ortsfesten Gehäuseteil 12, wobei für das antriebsseitige Wellenende 9.1 der Rotorwelle 9 die Lagerung im mechanischen Drehzahl-/Drehmomentwandler 6, insbesondere dem Planetenradsatz 7 erfolgt.

Vorzugsweise ist die elektrische Antriebsmaschine 2 als Transversalflußmaschine ausgeführt. Diese nach dem Prinzip der Wanderfeld-Erzeugung arbeitende Wechselstrommaschine kann verschiedenartig gestaltet sein. Denkbar sind dabei beispielsweise Ausführungen, wie sie aus den Druckschriften
1. DE 35 36 538 A1
2. DE 37 05 089 C1
3. DE 39 04 516 C1
4. DE 41 25 779 C1
bekannt sind. Der Offenbarungsgehalt dieser Druckschriften wird hiermit vollumfänglich bezüglich der Gestaltung einer Transversalflußmaschine in den Offenbarungsgehalt dieser Anmeldung mit einbezogen. Vorzugsweise weist die elektrische Antriebsmaschine 2, insbesondere die Transversalflußmaschine einen im wesentlichen symmetrischen Aufbau auf. Der Rotor 4 wird dabei von einer Trägerscheibe 14 und beidseitig sich von der zentralen Trägerscheibe 14 in axialer Richtung erstreckenden Polstrukturen 15 und 16 gebildet. Jede Polstruktur 15 beziehungsweise 16 besteht dabei aus wenigstens zwei nebeneinander angeordneten, durch eine Zwischenlage 17 beziehungsweise 18 getrennten Ringelementen - den Ringelementen 19 beziehungsweise 20 für die Polstruktur 15 und 21 beziehungsweise 22 für die Polstruktur 16. Die Ringelemente weisen dazu in Umfangsrichtung eine Vielzahl von wechselweise angeordneten polarisierten Magneten und Weicheisenelementen auf. Denkbar sind jedoch auch Ausführungen mit nur einer an einer zentralen Trägerscheibe 14 angeordneten Polstruktur, wobei jedoch aus Belastungsgründen vorzugsweise die symmetrische Anordnung gewählt wird.

Der dem Rotor 4 zugeordnete Stator 5 umfaßt vorzugsweise wenigstens einen hier im einzelnen in Figur 1 ebenfalls nicht dargestellten Außenstator 23 und einen Innenstator 24. Auch Ausführungen mit nur einem Außenstator oder einem Innenstator sind denkbar. Der Stator 5 ist dabei mit einem statortragenden Element 25 derart verbunden, daß beide im Einbauzustand eine bauliche Einheit 26 bilden. Das statortragende Element 25 ist dazu wenigstens über einen Teilbereich der Statorfläche, insbesondere der Statoraußenfläche, mit diesem verbunden. Es besteht theoretisch auch die hier nicht dargestellte Möglichkeit, den Stator 5 und das statortragende Element 25 als ein Bauteil, das heißt einstückig herzustellen. Das statortragende Element 25 wird vorzugsweise vom ortsfesten Gehäuseteil 12 gebildet. Im dargestellten Fall bei Ausführung der elektrischen Antriebsmaschine 3 als Transversalflußmaschine ist das statortragende Element 25 als glockenförmiges Gehäuseelement 27 ausgebildet, welches den Stator 5 beziehungsweise den Rotor 4 in Umfangsrichtung über deren axiale Erstreckung umschließt. Zur Realisierung der Lagerung des von der Drehzahl-/Drehmomentwandlungseinrichtung 6 weggewandten zweiten Teilbereiches 9.2 der Rotorwelle 9 umschließt das statortragende Element 25 den Rotor 4 auch in axialer Richtung. Aus Montagegründen ist dabei das statortragende Element 25 wenigstens zweiteilig ausgeführt, vorzugsweise jedoch mehrteilig. Im dargestellten Fall weist das glockenförmige Gehäuseelement 27 ein erstes Teilelement 28 und ein zweites Teilelement 29 auf, welche miteinander kraft- und/oder formschlüssig oder stoffschlüssig verbunden sind. Das erste Teilelement 28 umschließt dabei die Polstruktur 15 im Bereich des ersten Teilbereiches 9.1 der Rotorwelle, das heißt des antriebsseitigen Teilbereiches, während das zweite Teilelement 29 die Polstruktur 16 umschließt und damit in axialer Richtung betrachtet zur Lagerung des zweiten Teilbereiches 9.2 der Rotorwelle 9 dient. Durch die Erstreckung des ersten Teilelementes 28 zusätzlich in radialer Richtung in Richtung zur Rotorwelle 9 hin wird dabei in axialer Richtung betrachtet eine räumliche Trennung zwischen der mechanischen Drehzahl/Drehmomentwandlungseinrichtung 6 und der elektrischen Antriebsmaschine 3 vollzogen. Es ist theoretisch auch denkbar, auf den sich in radialer Richtung zur Rotorwelle 9, insbesondere zum ersten Teilbereich 9.1 hin erstreckenden Bereich 30 des ersten Teilelementes 28 des statortragenden Elementes zu verzichten und das statortragende Element als glockenförmiges Gehäuseelement auszuführen, welches die mechanische Drehzahl/Drehmomentwandlungseinrichtung 6 und die elektrische Antriebsmaschine 3 im Bereich der ersten Polstruktur 15 in Umfangsrichtung umschließt, wobei das glockenförmige Gehäuseelement in axialer Richtung ebenfalls die mechanische Drehzahl-/Drehmomentwandlungseinrichtung 6 auf der Antriebsseite umschließt. Im dargestellten Fall ist dazu ein weiteres drittes Teilelement 31 vorgesehen, welches mit dem ersten Teilelement direkt beziehungsweise dem zweiten Teilelement 29 über das erste Teilelement 28 verbunden ist, vorzugsweise mechanisch, und welches ein weiteres zweites Element 32 des Planetenradsatzes 7 trägt und gleichzeitig mittels einer Lageranordnung 33 den Abtrieb 34 des Planetenradsatzes 7, welcher vom Steg 7.4 gebildet wird, abstützt. Die Rotorwelle 9 ist somit zum einen auf der Nichtantriebsseite über die Lageranordnung 11 im statortragenden Element 25 und auf der Antriebsseite über den Planetenradsatz 7 im statortragenden Element 25 wenigstens mittelbar gelagert. Direkt stützt sich die Rotorwelle 9, insbesondere der erste Teilbereich auf der Antriebsseite an den Planetenrädern 7.3 des Planetenradsatzes 7 ab. Die Lagerung erfolgt dabei mindestens in drei Planetenrädern 7.3, so daß eine optimale Abstützung gewährleistet werden kann. Die erfindungsgemäße Lösung bietet den Vorteil, daß eine große Lagerbasis geschaffen wird, bei welcher auftretende Radialfehler zwischen dem Festlager 11 und der Planetenträgerlagerung 33 für die Verzahnung ohne negative Folgen verbleibt. Im lastfreien Zustand kann dann auf dieser Seite die Rotorlagerung entsprechend dem Zahnspiel außermittig sein, unter Last wird der Rotor jedoch aber wieder zentriert. Die erfindungsgemäße Lösung schafft damit eine hinsichtlich der Lagerung des Rotors 4 optimal gestaltete elektrische Antriebsvorrichtung 1, insbesondere einen Getriebemotor 2, welcher zusätzlich durch minimalen Bauraumbedarf gekennzeichnet ist.

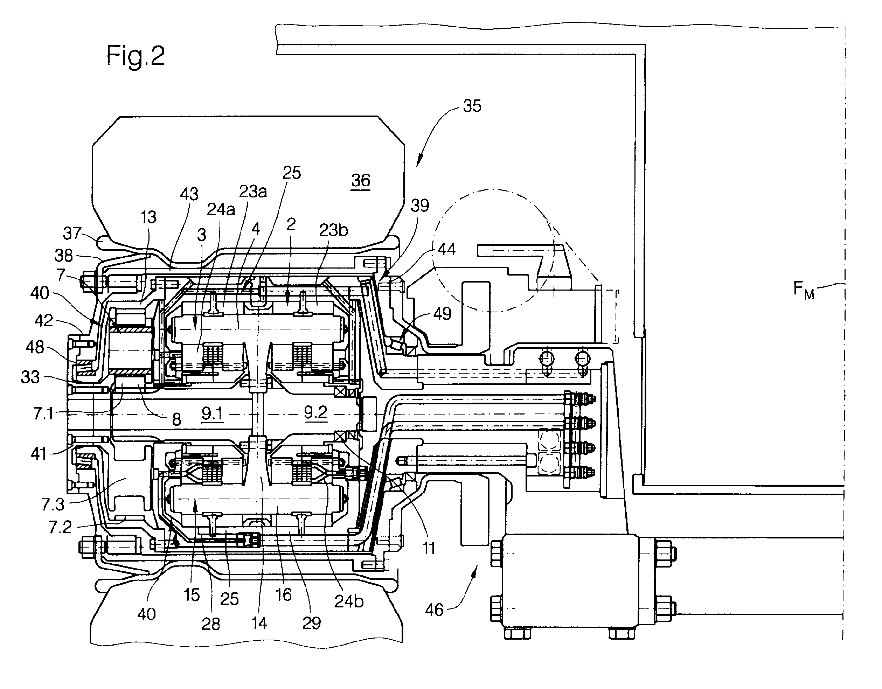

Die Figur 2 verdeutlicht eine Einsatzmöglichkeit der erfindungsgemäßen Lösung für die konstruktive Gestaltung eines Getriebemotors 2 anhand eines Ausschnittes aus einer Radantriebsvorrichtung 35 für ein Niederflurfahrzeug. Für gleiche Elemente werden daher die gleichen Bezugszeichen verwendet. Zu diesem Zweck ist der Getriebemotor 2 einem Rad 36 zugeordnet. Dieses weist eine Felge 37, einen Radkörper 38 sowie eine Radnabe 39 auf. Die Felge 37 ist dabei über den Radkörper 38 mit der Radnabe 39 verbunden. Bei dem Rad 36 handelt es sich im dargestellten Fall um einen Reifen mit größerer Breite, im einzelnen einen sogenannten Super-Single-Reifen. Die Radantriebsvorrichtung 35 ist dabei anhand eines Axialschnittes durch das Fahrzeug in einer Ebene senkrecht zu einer Ebene, die durch die Fahrzeugmittenachse und eine in vertikaler Richtung verlaufenden und senkrecht zur Fahrzeugmittenachse ausgerichteten Achse beschreibbar ist, dargestellt. Die elektrische Antriebsmaschine 3, insbesondere der Getriebemotor 2 sind dabei vorzugsweise fast vollständig in axialer Richtung im Rad 36 integriert, das heißt in einem Bereich im Rad 36 angeordnet, welcher der axialen Erstreckung der Radfelge 37 entspricht. Der Grundaufbau der elektrischen Antriebsmaschine 3 entspricht dem in der Figur 1 beschriebenen. Der Innenstator 24 umfaßt dabei ein erstes Innenstatorelement 24a und ein zweites Innenstatorelement 24b, welche jeweils den einzelnen Polstrukturen 15 und 16 zugeordnet sind. In Analogie ist der Außenstator 23 ebenfalls in zwei Außenstatorelemente 23a und 23b unterteilt, welche den einzelnen Polstrukturen 15 beziehungsweise 16 zugeordnet sind. Die einzelnen Statorelemente, die Innenstatorelemente 24a, 24b und die Außenstatorelemente 23a und 23b umfassen vorzugsweise eine Vielzahl von in Umfangrichtung hintereinander in bestimmten Abständen zueinander angeordneten Schnittbandkernen. Vorzugsweise sind diese Schnittbandkerne aus hintereinander angeordneten Blechelementen ausgeführt.

Der Rotor 4 der elektrischen Antriebsmaschine 3, insbesondere der Transversalflußmaschine, steht dabei wenigstens mittelbar mit der Radnabe 39 in Triebverbindung. Die Radnabe 39 ist wiederum mit dem Radkörper 38 drehfest verbunden und damit mit der Radfelge 37. Das den Stator 5 tragende Element 25 ist dabei als Radachse 40 ausgeführt. Die Abstützung des Rades 36 über den Radkörper 38 und die Radnabe 39 erfolgt dabei mittels entsprechender Lageranordnungen, hier einer ersten äußeren Lageranordnung 48 und einer zweiten inneren Lageranordnung 49 auf der Radachse 40. Der Rotor 4 ist in axialer Richtung betrachtet zwischen der inneren Lageranordnung 49 und der äußeren Lageranordnung 48 zur Abstützung der Radnabe 39 auf der Radachse 40 angeordnet. Die Lagerung des Rotors 4 bzw. der Rotorwelle 9 erfolgt im ersten antriebsseitigen Teilbereich 9.1über den Planetenradsatz 7 und eine Lageranordnung 33, welche beispielsweise als Nadellager ausgeführt ist, am statortragenden Bauelement 25. Der zweite Teilbereich 9.2 stützt sich über die Lageranordnung 11am statortragenden Bauelement 25 und damit der Radachse 40 ab.

Bei Inbetriebnahme der elektrischen Antriebsmaschine 3 wird die elektrische Leistung in mechanische umgewandelt und über den Rotor 4, welcher mit der Radnabe 39 in Triebverbindung steht und vorzugsweise drehfest mit dieser gekoppelt ist, auf das Rad 36 übertragen.

Die Ausführung als Getriebemotor 2 mit einer der elektrischen Antriebsmaschine 3 nachgeschalteten mechanischer Drehzahl/Drehmomentenwandlungseinrichtung 6 ermöglicht eine Überbeziehungsweise Untersetzung der elektrischen Antriebsmaschine 3 ins langsame. Dabei erfolgt die Kopplung beziehungweise Realisierung der Triebverbindung zwischen dem Rotor 4 der elektrischen Antriebsmaschine 3 und der Radnabe 39 über die mechanische Drehzahl/Drehmomentwandlungseinrichtung 6. Zu diesem Zweck ist der Rotor 4 der elektrischen Antriebsmaschine 3 drehfest mit einer Welle gekoppelt, welche sich über das Lager 33, vorzugsweise ein Nadellager auf der Radachse 40 abstützt und mit dem Eingang 8 der mechanischen Drehzahl/Drehmomentwandlungseinrichtung 6 gekoppelt ist. Die mechanische Drehzahl-/Drehmomentwandlungseinrichtung 6 umfaßt wenigstens einen Planetenradsatz 7, welcher wie in Figur 1 bereits ausgeführt, wenigstens ein Sonnenrad 7.1, ein Hohlrad 7.2, mindestens 3 Planetenräder 7.3 und einen Steg 7.4 aufweist. Das Sonnenrad 7.1 ist dabei vorzugsweise in den ersten Teilbereich 9.1 der Rotorwelle 9 eingearbeitet. Es besteht jedoch auch theoretisch die Möglichkeit, dieses als separates Bauteil drehfest mit der Rotorwelle 9 zu verbinden. Das Hohlrad 7.2 ist am statortragenden Bauelement 25 angeordnet. Vorzugsweise ist dieses in das statortragende Bauelement 25 beziehungsweise bei Bestehen des statortragenden Bauelementes aus mehreren miteinander kraft- und/oder formschlüssig miteinander verbundenen Teilelementen, in eines von diesen eingearbeitet. Den Ausgang beziehungsweise den Abtrieb des mechanischen Drehzahl/Drehmomentwandlers 6 und damit des Getriebemotors 2 bildet der Steg 7.4. Dieser ist drehfest mit einer sogenannten Antriebswelle 41 verbunden. Die Antriebswelle 41 bildet die Verbindungswelle zwischen dem Ausgang der mechanischen Drehzahl-/Drehmomentwandlungseinrichtung 6 beziehungsweise dem Getriebemotor 2 und der Radnabe 39. Diese ist ebenfalls drehfest mit der Antriebswelle 41 gekoppelt. Die Abstützung des Rotors 4 der elektrischen Antriebsmaschine 3, der mechanischen Drehzahl/Drehmomentwandlungseinrichtung 6 und der Radnabe 8 erfolgt auf dem statortragenden Bauelement 25 über die äußere Lageranordnung 48. Diese ist vorzugsweise als Schrägrollenlager ausgeführt. Die Abstützung des Rades 36 erfolgt des weiteren über die innere Lageranordnung 49 auf dem statortragenden Bauelement 25 beziehungsweise eine mit diesem gekoppelten Bauelement. In dieser Figur wird ersichtlich, daß die Anordnung des Getriebemotors 2 zwischen der Radlagerung, das heißt der Lager, über welche sich das Rad auf der Radachse, als welche das statortragende Bauelement 25 fungiert, erfolgt. Im dargestellten Fall besteht das statortragende Bauelement 25 aus mehreren Teilelementen, einem ersten Teilelement 28, einem zweiten Teilelement 29 und einem dritten Teilelement 31. Das erste Teilelement 28 trägt dabei wenigstens jeweils einen Außenstator 14a und einen Innenstator 13a. Das zweite Teilelement 29 bildet die Lagerung beziehungsweise die Verbindung zwischen dem Außenstator 14b und dem Innenstator 13b mit dem statortragenden Element 25. Beide Bauelemente sind dabei derart ausgeführt, daß diese die elektrische Antriebsmaschine 3 in radialer Richtung im wesentlichen glockenförmig umschlingen. Das dritte Teilelement 31 trägt das Hohlrad 7.2 der mechanischen Drehzahl/Drehmomentwandlungseinrichtung 6. Aus Montagegründen sind die einzelnen Teilelemente lösbar miteinander verbunden, vorzugsweise mittels Schraubverbindungen, die in Umfangsrichtung auf einem bestimmten Durchmesser des statortragenden Bauelementes 25 in bestimmten Abständen zueinander angeordnet sind. Die Radnabe 39 besteht ebenfalls aus einer Mehrzahl von einzelnen Elementen, im einzelnen einem ersten Bauelement 42, einem zweiten Bauelement 43 und einem dritten Bauelement 44. Das erste Bauelement 42 der Radnabe 39 bildet dabei den drehfest mit der Antriebswelle 41 gekoppelten Teil der Radnabe 39 sowie die Lagerfläche zur Abstützung beziehungsweise Fixierung der Lageranordnung 33 zur Abstützung der Radnabe 39 auf der Radachse 40, das heißt dem statortragenden Bauelement 25. Das zweite Bauelement der Radnabe 39 ist mit dem ersten Bauelement 42 lösbar über Schraubverbindungen gekoppelt und bildet in axialer Richtung zum Fahrzeuginneren hin gerichtet einen entsprechenden Anschlag, welcher am Radkörper 38 zum Anliegen kommt.

Das dritte Bauelement 44 weist in radialer Richtung ebenfalls eine Verdickung auf, welche wenigstens mittelbar an der Radscheibe beziehungsweise dem Radkörper 38 zum Anliegen kommt. Die Radnabe 39, welche aus wenigstens den drei genannten Elementen 42 bis 44 besteht, ist form- beziehungsweise kraftschlüssig beispielsweise über Schraubverbindungen mit dem Radkörper 38 verbunden. Die Radnabe 39 bildet somit eine Art glockenförmiges Gehäuse, bestehend aus mehreren Bauteilen, welche in Umfangsrichtung den Achskörper beziehungsweise die Radachse 40, insbesondere das statortragende Bauelement 25, im wesentlichen innerhalb der Felge 37 umschließt.

Das statortragende Bauelement 25 ist in der Regel mit der Achseinheit 46, welche zwei einander gegenüberliegende Räder miteinander verbindet, befestigt. Der Leistungsfluß, das heißt die an der elektrischen Antriebsmaschine 3 umgewandelte elektrische Leistung in mechanische Leistung erfolgt vom Rotor 4 der elektrischen Antriebsmaschine 3 über die mechanische Drehzahl-/Drehmomentwandlungseinrichtung 6 auf die Antriebswelle 41 und von da auf die Radnabe 39, welche wiederum mit dem Radkörper 38 und der Felge 37 gekoppelt ist.

Die Verwendung einer elektrischen Antriebsmaschine in Form einer Transversalflußmaschine ermöglicht es des weiteren, aufgrund von deren hoher Kraftdichte, mit einem einstufigen Planetengetriebe als Drehzahl/Drehmomentwandlungseinrichtung 6 auszukommen, um die geforderte Steigfähigkeit und die Endgeschwindigkeit zu erreichen. Aufgrund der geringen geforderten Anzahl an Bauelementen zur Erbringung der erforderlichen Leistung, insbesondere des entsprechenden Verhältnisses von Drehzahl und Drehmoment, wird es möglich, sowohl die elektrische Antriebsmaschine 2 als auch den Drehzahl-/Drehmomentwandler 6 zwischen der Radlagerung, das heißt der inneren Lageranordnung und der äußeren Lageranordnung zur Abstützung des Rades auf der Radachse 40 anzuordnen.

Vorzugsweise ist die elektrische Antriebsmaschine 3 frei von einer Abdichtung gegenüber der mechanischen Drehzahl-/Drehmomentwandlungseinrichtung 6, welche in der Regel mit Schmiermittel versorgt wird. Dadurch wird es möglich, das ohnehin zur Schmierung der mechanischen Drehzahl/Drehmomentwandlungseinrichtung 6 beziehungsweise der einzelnen Lageranordnungen erforderliche Schmiermittel gleichzeitig zur Kühlung der elektrischen Antriebsmaschine zu nutzen und somit eine einfache Kühlung zu ermöglichen.

### Bezugszeichenliste

- 1: elektrische Antriebsvorrichtung
- 2: Getriebemotor
- 3: elektrische Antriebsmaschine
- 4: Rotor
- 5: Stator
- 6: mechanische Drehzahl-/Drehmomentwandlungseinrichtung
- 7: Planetenradsatz
- 7.1: Sonnenrad des Planetenradsatzes
- 7.2: Hohlrad des Planetenradsatzes
- 7.3: Planetenräder
- 7.4: Steg des Planetenradsatzes
- 8: Eingang des Planetenradsatzes
- 9: Rotorwelle
- 9.1: erster Teilbereich der Rotorwelle
- 9.2: zweiter Teilbereich der Rotorwelle
- 10: von der mechanischen Drehzahl/Drehmomentwandlungseinrichtung 6 abgewandte Seite der elektrischen Antriebsmaschine
- 11: Lageranordnung
- 12: Gehäuseelement
- 13: Zwischenelement
- 14: Trägerscheibe
- 15: Polstruktur
- 16: Polstruktur
- 17: Zwischenlage aus magnetisch und elektrisch nicht leitfähigem Material
- 18: Zwischenlage aus magnetisch und elektrisch nicht leitfähigem Material
- 19: Ringelement
- 20: Ringelement
- 21: Ringelement
- 22: Ringelement
- 23: Außenstator
- 23a, 23b: Außenstatorelement
- 24: Innenstator
- 24a, 24b: Innenstatorelement
- 25: statortragendes Element
- 26: bauliche Einheit
- 27: glockenförmiges Gehäuseelement
- 28: erstes Teilelement
- 29: zweites Teilelement
- 30: Bereich
- 31: drittes Teilelement
- 32: zweites Element des Planetenradsatzes 7
- 33: Lageranordnung
- 34: Abtrieb
- 35: Radantriebsvorrichtung
- 36: Rad
- 37: Felge
- 38: Radkörper
- 39: Radnabe
- 40: Radachse
- 41: Antriebswelle
- 42: erstes Bauelement
- 43: zweites Bauelement
- 44: drittes Bauelement
- 45: Lagerung
- 46: Achseinheit
- 47: Keilwellenverbindung
- 48: äußere Lageranordnung
- 49: innere Lageranordnung

## Patentansprüche

1. Elektrische Antriebsvorrichtung (1), insbesondere Getriebemotor (2);
1.1 mit einer elektrischen Antriebsmaschine (3) und einer mit dieser drehfest verbundenen mechanischen Drehzahl/Drehmomentenwandlungseinrichtung (6);
1.2 die elektrische Antriebsmaschine (3) und die mechaniche Drehzahl/Drehmomentenwandlungseinrichtung (6) sind koaxial zueinander angeordnet;
1.3 die elektrische Antriebsmaschine (3) umfaßt einen Rotor (4) mit einer Rotorwelle (9) und einen Stator (4);
1.4 die mechanische Drehzahl-/Drehmomentenwandlungseinrichtung (6) umfaßt mindestens einen Planetenradsatz (7) mit einem Sonnenrad (7.1), einem Hohlrad (7.2), Planetenrädern (7.3) und einem Steg (7.4), wobei der mit der Rotorwelle (9) gekoppelte Eingang (8) des Planetenradsatzes (7) vom Sonnenrad (7.1) und der Abtrieb vom Steg (7.4) gebildet werden;
gekennzeichnet durch die folgenden Merkmale:
1.5 das Sonnenrad (7.1) ist auf der Rotorwelle (9) angeordnet;
1.6 die Rotorwelle (9) ist im Bereich des Rotorwellenenendes, welches von der mechanischen Drehzahl-/Drehmomentwandlungseinrichtung (6) abgewandt ist, mittels einer ersten, ein Festlager umfassenden Lageranordnung (11) an einem ortsfesten Gehäuseteil (12) und im Bereich des antriebsseitigen und das Sonnenrad (7.1) tragenden Rotorwellenenendes in einer zweiten Lageranordnung, welche von den Planetenrädern (7.3) des Planetenradsatzes (7) gebildet wird, gelagert;
1.7 der Steg (7.4) stützt sich über eine weitere dritte Lageranordnung (33) wenigstens mittelbar am ortsfesten Gehäuseteil (12) ab.

2. Elektrische Antriebsvorrichtung nach Anspruch 1, dadurch gekennzeichnet, daß das ortsfeste Gehäuseteil (12) von einem, den Stator (5) der elektrischen Antriebsmaschine (3) tragenden Element (25) gebildet wird.

3. Elektrische Antriebsvorrichtung nach einem der Ansprüche 1 oder 2, dadurch gekennzeichnet, daß der Stator (5) und das statortragende Element (25) als einteiliges Bauteil ausgeführt sind.

4. Elektrische Antriebsvorrichtung nach einem der Ansprüche 2 oder 3, dadurch gekennzeichnet, daß das statortragende Element (25) wenigstens zwei Teilelemente (28, 29) umfaßt, welche mittels einer kraft- und/oder formschlüssigen und/oder stoffschüssigen Verbindung im Einbauzustand eine bauliche Einheit bilden und den Rotor (4) in Umfangsrichtung umschließen.

5. Elektrische Antriebsvorrichtung nach Anspruch 4, dadurch gekennzeichnet, daß eines der Teilelemente (28, 29) des statortragenden Elementes (25) in Umfangsrichtung den Planetenradsatz (7) mit umschließt.

6. Elektrische Antriebsvorrichtung nach Anspruch 4, dadurch gekennzeichnet, daß der Steg (7.4) sich über die dritte Lageranordnung an einem mit dem statortragenden Element (25) verbundenen Zwischenelement (13) abstützt.

7. Elektrische Antriebsvorrichtung nach einem der Ansprüche 1 bis 6, dadurch gekennzeichnet, daß die dritte Lageranordnung (33) wenigstens ein Nadellager umfaßt.

8. Elektrische Antriebsvorrichtung nach einem der Ansprüche 1 bis 7,
dadurch gekennzeichnet, daß der Planetenradsatz (7) mindestens drei Planetenräder (7.3) umfaßt.

9. Elektrische Antriebsvorrichtung nach einem der Ansprüche 1 bis 8, gekennzeichnet durch die folgenden Merkmale:
9.1 die elektrische Antriebsmaschine (3) ist als Transversalflußmaschine ausgeführt;
9.2 der Rotor (4) umfaßt eine Trägerscheibe (14) und wenigstens eine sich in axialer Richtung von der Trägerscheibe (14) weg erstreckende und an dieser angeordnete Polstruktur (15,16);
9.3 jede Polstruktur umfaßt zwei nebeneinanderliegende, durch eine Zwischenlage (17, 18) aus magnetisch und elektrisch nicht leitendem Material (Zwischenring) getrennte Reihen (19, 20, 21, 22) aus in Umfangsrichtung wechselweise magnetisierten Magneten mit dazwischenliegenden Weicheisenelementen.

10. Elektrische Antriebsvorrichtung nach Anspruch 9, dadurch gekennzeichnet, daß die Trägerscheibe (14) zwei an beiden Seiten sich in axialer Richtung von der Trägerscheibe weg erstreckende und an dieser angeordnete Polstrukturen (15, 16)umfaßt.

11. Elektrische Antriebsvorrichtung nach einem der Ansprüche 8 bis 10, dadurch gekennzeichnet, daß der Stator (5) wenigstens einen Außenstator (23) umfaßt, welcher in radialer Richtung betrachtet auf einem Durchmesser angeordnet ist, welcher größer als der Durchmesser des Außenumfanges des Rotors (4) ist.

12. Elektrische Antriebsvorrichtung nach einem der Ansprüche 8 bis 10 dadurch gekennzeichnet, daß der Stator (5) einen Innenstator (24) umfaßt.

13. Radantriebsvorrichtung (35), insbesondere Einzelradantrieb für ein Rad (36) eines Fahrzeuges, umfassend wenigstens eine sich wenigstens mittelbar auf einem Achskörper (40) einer Achseinheit (46) abstützende Radnabe (39) und eine zur Stützung eines Reifens vorgesehene Radfelge (37) mit einer mit der Radnabe (39) gekoppelten elektrischen Antriebsvorrichtung (1) nach einem der Ansprüche 1 bis 12.

14. Radantriebsvorrichtung nach Anspruch 13, dadurch gekennzeichnet, daß die elektrische Antriebsvorrichtung (1) wenigstens teilweise innerhalb eines Bereiches, welcher durch die axiale Erstreckung der Radfelge (37) beschrieben wird, angeordnet ist.

15. Radantriebsvorrichtung nach Anspruch 14, dadurch gekennzeichnet, daß die elektrische Antriebsvorrichtung (1) in axialer Richtung betrachtet zwischen einer inneren Lagereinheit (49) und einer äußeren Lagereinheit (48) zur Abstützung der Radnabe (39) auf dem Achskörper (40) angeordnet ist.
